# DEMANDE DE BREVET EUROPEEN

(11) **EP 1 219 491 A1**
(43) Date de publication de la demande: **03.07.2002**
(21) Numéro de dépôt: 01403133.0
(22) Date de dépôt: 05.12.2001
(51) Int. Cl.: B60L 5/22

(54) **Dispositif de captage d'un pantographe**

(30) Priorité: 29.12.2000 FR 0017304
(71) Demandeur: FAIVELEY TRANSPORT, 93200 Saint-Denis (FR)
(72) Inventeur: Blanvillain, Gérard, 37270 Veretz (FR)
(74) Mandataire: Geismar, Thierry

(57) **Abrégé**

L'invention concerne un dispositif de captage (2) d'un pantographe (1) comprenant deux bandes de frottement (3) reliées entre elles par au moins une traverse (4) reliée et articulée à une bielle stabilisatrice (5) dudit pantographe (1).

Chacune des bandes de frottement (3) est reliée à ladite traverse (4) par un levier (7) pouvant pivoter pour faire basculer ladite bande de frottement (3) sous l'effet d'une force déterminée rencontrée par ladite bande de frottement (3) lors de son déplacement et quelque soit le sens de déplacement.

## Description

L'invention concerne un dispositif de captage pour pantographe permettant d'assurer la protection de la partie supérieure du pantographe et de la caténaire en cas de choc.

Notamment, ce dispositif permet d'éviter la destruction partielle ou totale du pantographe et de la caténaire lorsque survient un défaut ou une irrégularité de la caténaire, tout en assurant une continuité électrique de captage du courant.

A cet effet, l'invention concerne un dispositif de captage d'un pantographe comprenant deux bandes de frottement reliées entre elles par au moins une traverse, caractérisé en ce que chacune des bandes de frottement est reliée à ladite traverse par un levier pouvant pivoter pour faire basculer ladite bande de frottement suivant une direction sensiblement perpendiculaire auxdites bandes de frottement, sous l'effet d'une force déterminée rencontrée par ladite bande de frottement lors de son déplacement, quelque soit le sens du déplacement.

Ainsi, sous l'effet d'un effort longitudinal excessif appliqué sur les bandes de frottement, le dispositif autorise le basculement des leviers, ce qui évite que les bandes de frottement ou que l'ensemble du pantographe soient endommagés.

D'autres objets et avantages apparaîtront au cours de la description suivante, en référence aux dessins annexés, donnés à titre d'exemples non limitatifs, dans lesquels :

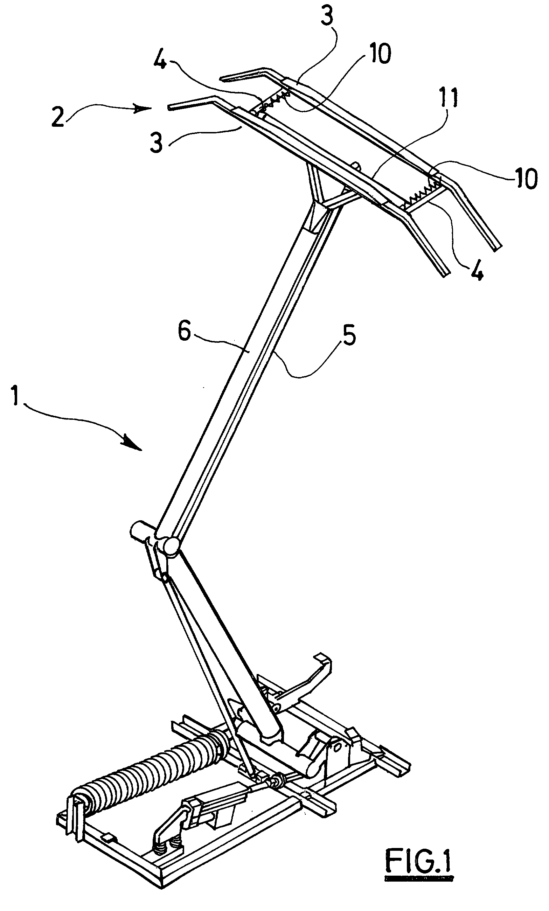

- la figure 1 représente un pantographe comprenant le dispositif de captage selon l'invention ;
- la figure 2 représente schématiquement une vue de profil du dispositif de captage selon l'invention, les bandes de frottement étant en position d'équilibre stable ;
- la figure 3 représente schématiquement le dispositif de captage selon l'invention sous l'effet d'un effort longitudinal F ;
- la figure 4 représente schématiquement le dispositif de captage selon l'invention sous l'effet d'un effort longitudinal F contraire à celui représenté sur la figure 3.

Un pantographe 1 comprend un dispositif de captage 2 selon l'invention.

Le dispositif de captage 2 comprend deux bandes de frottement 3 reliées entre elles par au moins une traverse 4.

Dans le mode de réalisation représenté sur les figures, deux traverses 4 relient les deux bandes de frottement 3.

Ces traverses 4 sont situées de préférence aux extrémités des bandes de frottement 3 et sont perpendiculaires à celles-ci.

Les traverses 4 sont reliées entre elles par une barre 15 sur laquelle s'articule une bielle stabilisatrice 5.

Chacune des bandes de frottement 3 est reliée aux traverses 4 par un levier 7.

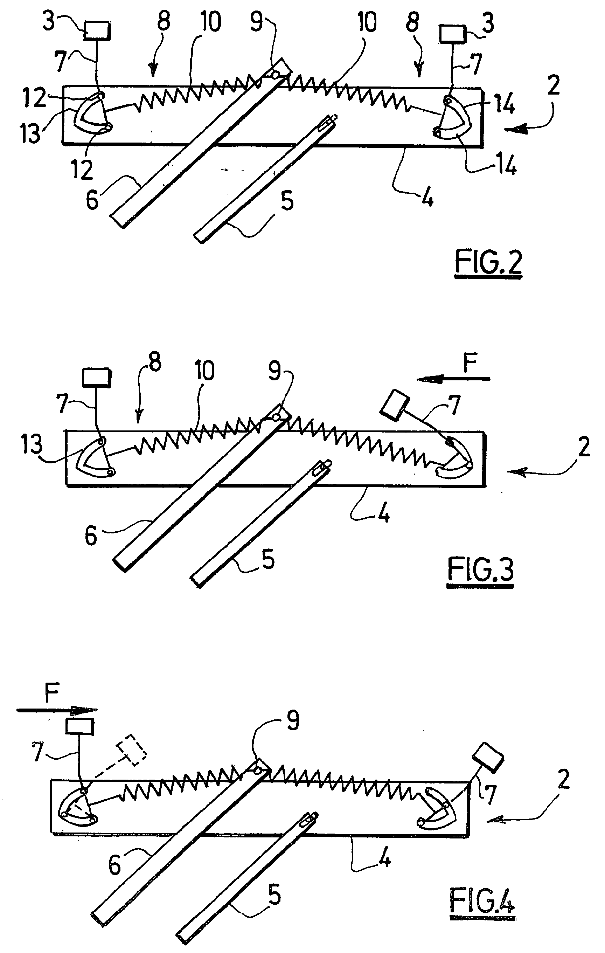

Ce levier 7 peut pivoter pour faire basculer ladite bande de frottement 3 sous l'effet d'une force déterminée F rencontrée par ladite bande de frottement 3 lors de son déplacement, tel que représenté sur les figures 3 et 4.

Les bandes de frottement basculent suivant une direction qui leur est sensiblement perpendiculaire dans un sens ou dans l'autre.

Chacun des leviers 7 est relié à des moyens de rappel élastiques 8 qui sont eux-mêmes reliés à un point fixe 9 situé entre deux leviers 7 d'un même côté du dispositif de captage.

Ces moyens élastiques 8 sont par exemple des ressorts 10. Ces ressorts peuvent être par exemple à spires enroulées ou à lames.

Toutefois, d'autres moyens de rappel élastiques 8 peut être envisagés, tels que par exemple des vérins hydrauliques, pneumatiques, ou similaires, ou tout autre dispositif élastique permettant d'assurer une fonction identique.

Le point fixe 9 est situé sur une barre fixe 11 s'étendant perpendiculairement aux traverses 4 et solidaire des extrémités du bras supérieur 6 du pantographe 1.

Chaque levier 7 d'une bande de frottement 3 est relié à la traverse 4 au moyen de deux doigts 12 espacés.

Ces doigts 12 s'étendent perpendiculairement à la direction longitudinale des traverses 4.

Ces deux doigts 12 sont engagés dans une lumière 13 de forme arquée.

Cette lumière est située à l'extrémité d'une traverse 4.

La force exercée par le ressort 10 tend à maintenir les deux doigts 12 en appui contre les extrémités de ladite lumière 13 arquée lorsqu'aucun effort n'est appliqué sur les bandes de frottement 3 tel que représenté sur la figure 2.

Chaque lumière 13 présente une convexité dirigée dans une direction opposée au ressort 10 et sensiblement symétrique à la direction dudit ressort 10 en l'absence d'effort exercé sur les bandes de frottement (figure 2).

La lumière 13 comprend notamment deux portions d'arcs 14 qui se rejoignent en un point situé sur ledit axe de symétrie.

Le rayon de courbure de chacune des deux portions d'arcs 14 est égal à la distance entre les deux doigts 12 en l'absence d'effort exercé.

L'extrémité de chaque ressort 10 opposée au point fixe 9 est fixé sur le levier 7 correspondant approximativement à mi distance entre les deux doigts 12 dudit levier 7.

La dispositif selon l'invention fonctionne de la façon suivante :

Lorsque qu'aucun effort n'est exercé sur les bandes de frottement 3, ces dernières se situent dans un plan sensiblement horizontal tel que représenté figure 2.

Sur les figures 3 et 4, la flèche représente l'effort appliqué sur l'une des bandes de frottement 3 (ou les deux).

Sur la figure 3, l'effort appliqué F exerce une contrainte sur une des bandes de frottement 3 provoquant le basculement de celle-ci vers le centre du dispositif de captage 2 dans une direction sensiblement perpendiculaire à la bande de frottement. Le doigt 12 situé à l'extrémité supérieure de la lumière 13 arquée sert alors de centre de rotation pour le levier 7 correspondant.

Simultanément, le doigt 12 inférieur suit la portion d'arc 14 inférieure jusqu'à son autre extrémité. La course du doigt 12 est donc limitée par la longueur de la portion d'arc 14 qu'il parcourt.

Ceci permet d'éviter que la bande de frottement 3 entre en contact avec d'autres éléments du dispositif de captage 2 lors de son basculement.

De façon similaire, la figure 4 représente l'effet d'un effort longitudinal appliqué en sens inverse sur les bandes de frottement 3 provoquant le basculement d'une des bandes de frottement 3 (représentée en trait plein) vers l'extérieur du dispositif de captage 2, et le basculement de l'autre bande de frottement 3 (représentée en traits pointillés) vers l'intérieur du dispositif de captage 2, dans une direction sensiblement perpendiculaire aux bandes de frottement.

Selon le sens de basculement de la bande de frottement 3, le doigt 12 inférieur ou supérieur joue le rôle de centre de symétrie, l'autre doigt 12 parcourant sa portion d'arc 14.

Lorsque les efforts appliqués sur les bandes de frottement 3 cessent, les bandes de frottement sont ramenées à leur position nominale par la force des ressorts 10 (figure 2).

Dans le mode de réalisation représenté sur les figures, deux ressorts 10 sont montés en opposition aux extrémités de chaque bande de frottement 3.

Ces deux ressorts 10 procurent une faible raideur dans le sens vertical et une forte raideur dans le sens horizontal, assurant ainsi une liaison souple avec la bielle stabilisatrice 5 et le bras supérieur 6 du pantographe et assurant ainsi la suspension du dispositif de captage 2 par rapport auxdits bras.

En effet, les deux ressorts 10 combinent l'effet de rappel des leviers et la suspension des bandes de frottement sur le pantographe.

La forte raideur procurée dans le sens longitudinal permet aux leviers 7 d'être maintenus fermement dans leur position de repos, la faible raideur dans le sens vertical permet d'assurer une qualité de captage optimale.

D'autres modes de réalisation du dispositif de captage 2 selon l'invention peuvent être envisagés sans sortir du cadre de l'invention.

Par exemple, les leviers 7 pourraient être reliés aux traverses par un seul axe de rotation, des butés élastiques étant alors disposées de part et d'autre du levier sur la traverse afin de limiter la course du levier 7 lorsque celui-ci se déplace.

## Revendications

1. Dispositif de captage d'un pantographe (1) comprenant deux bandes de frottement (3) reliées entre elles par au moins une traverse (4) articulée à une bielle stabilisatrice (5) du pantographe, **caractérisé en ce que** chacune des bandes de frottement (3) est reliée à ladite traverse (4) par un levier (7) pouvant pivoter pour faire basculer suivant une direction sensiblement perpendiculaire auxdites bandes (3) ladite bande de frottement (3) sous l'effet d'une force déterminée (F) rencontrée par ladite bande de frottement (3) lors de son déplacement.

2. Dispositif selon la revendication 1 **caractérisée en ce que** chacun desdits leviers (7) est relié à des moyens de rappel élastiques (8) qui sont eux-mêmes reliés à un point fixe (9) situé entre les deux leviers (7).

3. Dispositif selon la revendication 2 **caractérisé en ce que** les moyens de rappel élastiques (8) sont des ressorts (10).

4. Dispositif de captage (2) selon les revendications 2 ou 3, **caractérisé en ce que** ledit point fixe (9) est situé sur une barre fixe (11) s'étendant perpendiculairement à ladite traverse (4).

5. Dispositif selon l'une des revendications 2 ou 3, **caractérisé en ce que** ledit point fixe (9) est situé sur une barre fixe (11) s'étendant perpendiculairement à deux traverses (4) reliant chacune les extrémités opposées des deux bandes de frottement (3).

6. Dispositif selon l'une des revendications 1 à 5, **caractérisé en ce que** chaque levier (7) d'une bande de frottement (3) est relié à la traverse (4) au moyen de deux doigts (12) espacés engagés dans une lumière (13) de forme arquée, le force exercée par le ressort (10) tendant à maintenir les deux doigts (12) en appui contre les extrémités de ladite lumière (13) arquée lorsqu'aucun effort n'est appliqué sur les bandes de frottement (3).

7. Dispositif selon la revendication 6, **caractérisé en ce que** la lumière (13) présentant une convexité dirigée dans une direction opposée au ressort (10), est sensiblement symétrique par rapport à la direction dudit ressort (10) lorsqu'aucune force n'est exercée sur les bandes de frottement (3).

8. Dispositif selon l'une des revendications 6 ou 7, **caractérisé en ce que** la lumière (13) comprend deux portions d'arcs (14) qui se rejoignent en un point situé sur ledit axe de symétrie.

9. Dispositif selon la revendication 8, **caractérisé en ce que** le rayon de courbure de chacune des deux portions d'arcs (14) est égal à la distance entre les deux doigts (12) lorsqu'aucune force n'est appliquée sur les bandes de frottement (3).

10. Pantographe (1) **caractérisé en ce qu'**il comprend un dispositif de captage (2) selon l'une des revendications 1 à 9.
